# EUROPÄISCHE PATENTSCHRIFT

(11) **EP 0 556 626 B1**
(45) Veröffentlichungstag und Bekanntmachung des Hinweises auf die Patenterteilung: **09.11.1994**
(21) Anmeldenummer: 93101530.9
(22) Anmeldetag: 02.02.1993
(51) Int. Cl.: B24B 55/06, B01D 50/00, B04C 9/00

(54) **Vorrichtung zum Entfernen von Staub aus einer an einer Werkstückbearbeitungsmaschine abgesaugten Staubluft**
Device to separate the dust from dusty air sucked from a machine tool
Appareil pour séparer la poussière de l'air poussiéreux aspiré d'une machine outil

(30) Priorität: 18.02.1992 DE 4204789
(43) Veröffentlichungstag der Anmeldung: 25.08.1993
(73) Patentinhaber: EUGEN LÄGLER GmbH, D-74363 Güglingen (DE)
(72) Erfinder: Lägler, Eugen, D-74363 Güglingen (DE)
(74) Vertreter: Reimold, Otto, Dipl.-Phys.Dr.

(56) Entgegenhaltungen:
- EP-A- 0 252 265
- DE-A- 3 735 106
- DE-C- 896 285
- US-A- 4 244 715

## Beschreibung

Die Erfindung betrifft eine Vorrichtung zum Entfernen von Staub aus einer an einer Werkstückbearbeitungsmaschine, insbesondere eine Bodenschleifmaschine, abgesaugten Staubluft, mit einem im Strömungsweg angeordneten Staubabscheider in Gestalt eines Flieh- oder Zyklonabscheiders, der eine untere Staubaustrittsöffnung, aus der der abgeschiedene Staub über einen Fallweg hinweg zu einer Anschlußöffnung zum Anschließen eines Staubsammelbehältnisses fällt, und eine obere Luftaustrittsöffnung für den Austritt der vom abgeschiedenen Staub befreite Luft aufweist, und mit einer im Strömungsweg dem Staubabscheider nachgeordneten Filtereinrichtung zum Ausfiltern des Reststaubes, die Ringgestalt aufweist und den Staubabscheider unter Bildung einer Filterkammer umschließt, die mit der Luftaustrittsöffnung des Staubabscheiders verbunden ist.

Vor allem bei Holzbearbeitungsmaschinen wie Maschinen zum Abschleifen von Holzböden ist es üblich, den anfallenden Staub mittels eines Gebläses von der jeweiligen Bearbeitungsstelle abzusaugen und die den Staub enthaltende Luft einem Staubfiltersack zuzuführen, dessen Wandmaterial den Staub zurückhält, so daß sich der Staub in dem Filtersack sammelt, während die gereinigte Luft durch das Wandmaterial abströmt. Dieses Vorgehen weist verschiedene Nachteile auf:
Mit zunehmender Füllhöhe des Filtersacks nimmt die freie Oberfläche seines Wandmaterials und somit die für den Durchtritt der Luft nach außen zur Verfügung stehende Fläche ab. Dies ergibt eine sich entsprechend verschlechternde Absaugleistung , so daß der Filtersack schon verhältnismäßig früh, wenn er sich erst zu einem Teil gefüllt hat, durch einen neuen Filtersack ersetzt werden muß. Solche Filtersäcke sind jedoch, ganz abgesehen von dem mit dem häufigen Auswechseln verbundenen Arbeitsaufwand, verhältnismäßig teuer.

Ferner ist das Filtersackmaterial, auch oberhalb der Füllhöhe, aufgrund des an ihm haftenden Staubes sehr staubig, was dazu führt, daß beim Auswechseln des Filtersacks, wenn dieser mit der Hand ergriffen und dabei zwangsläufig verformt wird, sozusagen eine Staubwolke austritt.

Gegenüber diesem in der Praxis üblichen Vorgehen ist es vorteilhafter, eine Vorrichtung der eingangs genannten Art zu verwenden, wie sie ähnlich aus der DE-AS 11 65 390 oder der DE-PS 896 285 bekannt ist. Bei einer solchen Vorrichtung wird in dem der Filtereinrichtung vorgeschalteten Staubabscheider der größte Teil des Staubes aus dem Luftstrom abgetrennt. Dieser Staub gelangt unmittelbar in das angeschlossene Staubsammelbehältnis, das, da es keine Filterfunktion besitzt und ausschließlich zum Sammeln des Staubes dient, aus staubdichtem, glattem Material bestehen kann, so daß es außen nicht staubig ist und auch innen oberhalb der Füllhöhe praktisch kein Staub haftet. Ein solches Behältnis läßt sich im wesentlichen ganz füllen, so daß es entsprechend selten geleert oder ausgetauscht werden muß.

Diese bekannten Vorrichtungen sind jedoch nach wie vor insoweit nachteilig, als sich im Laufe der Zeit in der Filterkammer ausgefilterter Reststaub ansammelt, der die zur Verfügung stehende Filterfläche verkleinert. Daher muß die Filtereinrichtung von Zeit zu Zeit abmontiert und der angesammelte Reststaub entfernt werden. Dies ist umständlich und verursacht einen Staubaustritt in die Umgebung.

Der vorliegenden Erfindung liegt deshalb die Aufgabe zugrunde, eine Vorrichtung der eingangs genannten Art zu schaffen, mit der sich ein saubereres Arbeiten erzielen läßt.

Diese Aufgabe wird erfindungsgemäß dadurch gelöst, daß an der Unterseite der Filterkammer eine Staubauslaßöffnung zum Abführen des ausgefilterten Staubes angeordnet und die Anschlußöffnung für das Staubsammelbehältnis sowohl der Staubaustrittsöffnung des Staubabscheiders als auch der Staubauslaßöffnung der Filterkammer gemeinsam zugeordnet ist, wobei der übergang von der Staubauslaßöffnung der Filterkammer zur Anschlußöffnung von einer Verschlußeinrichtung beherrscht wird, die mittels einer von außen her bedienbaren Betätigungseinrichtung zwischen einer den Übergang verschließenden Betriebsstellung und einer den Übergang freigebenden Reinigungsstellung verstellbar ist, wobei die Staubauslaßöffnung der Filterkammer mittels eines Verschlußschiebers als Verschlußeinrichtung mit dem Fallweg des Staubes zwischen dem Staubabscheider und der gemeinsamen Anschlußöffnung verbindbar ist und an der Unterseite des Staubabscheiders eine in axialer Richtung dem Fallweg entlang verschiebbare, von der Auslaßöffnung der Filterkammer ringförmig umschlossene Schieberhülse als Verschlußschieber angeordnet ist, deren dem Staubabscheider entgegengesetzten, der Anschlußöffnung zugewandten Ende ein feststehender Ringsitz zugeordnet ist, so daß die Schieberhülse in ihrer Betriebsstellung am Ringsitz anliegt und in ihrer Reinigungsstellung vom Ringsitz abgehoben ist.

Auf diese Weise läßt sich der von der Filtereinrichtung zurückgehaltene und sich in der Filterkammer absetzende Staub bei abgeschalteter Staubabsaugung entfernen, indem man die Verschlußeinrichtung in ihre Reinigungsstellung überführt, so daß der Staub in das Staubsammelbehältnis fällt. Führt man dies bei Bedarf von Zeit zu Zeit aus, kann sich in der Filterkammer überhaupt keine nennenswerte Staubmenge ansammeln. Daher muß die Filtereinrichtung nicht mehr von Zeit zu Zeit abmontiert werden.

Da der aus der Staubauslaßöffnung der Filterkammer fallende Staub ebenfalls wie der im Staubabscheider abgesonderte Staub zur gemeinsamen Anschlußöffnung gelangt, werden beide Staubmengen im gleichen an die Anschlußöffnung angeschlossenen Staubsammelbehältnis gesammelt, was den baulichen Aufwand verringert. In Zusammenhang hiermit steht, daß die Filterkammer mittels der Verschlußeinrichtung beim Betrieb von der gemeinsamen Anschlußöffnung getrennt werden kann. Andernfalls waren beim Betrieb die Staubaustrittsöffnung des Staubabscheiders und die Staubauslaßöffnung der Filterkammer unmittelbar miteinander verbunden.

Ein Ausführungsbeispiel der Erfindung sowie weitere zweckmäßige Ausgestaltungen werden nun anhand der Zeichnung im einzelnen erläutert. Es zeigen:

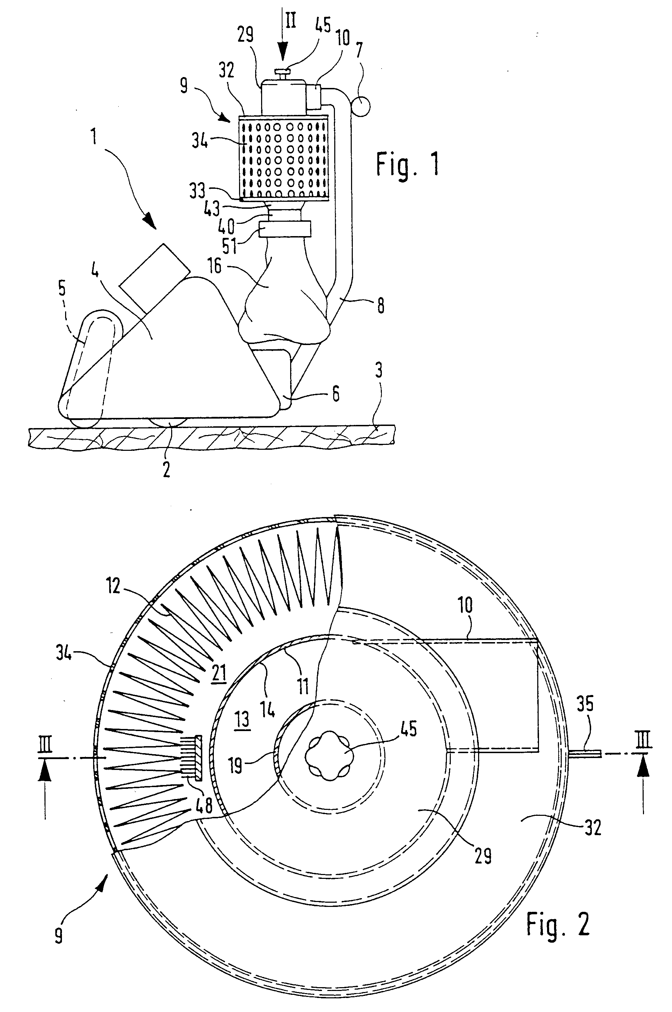

- Fig. 1: ein mit einer erfindungsgemäßen Vorrichtung ausgestattetes Holzbodenschleifgerät in schematischer Seitenansicht,

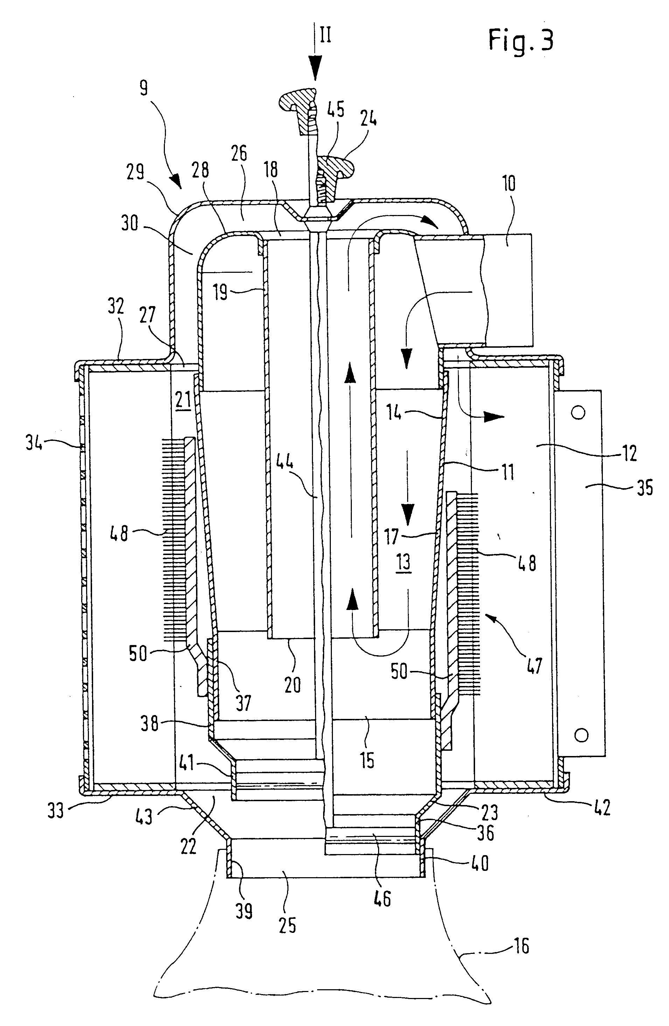

- Fig. 2: die bei der Anordnung nach Fig. 1 vorhandene erfindungsgemäße Vorrichtung in vergrößerter Draufsicht von oben gemäß Pfeil II in den Fig. 1 und 3, teilweise im etwa in halber Höhe gelegten Querschnitt, wobei in dem geschnitten dargestellten Bereich die unterhalb der Schnittebene befindlichen Teile und Linien der Übersichtlichkeit wegen nicht eingezeichnet sind, und
- Fig. 3: die gleiche Ausführungsform der erfindungsgemäßen Vorrichtung im Längsschnitt gemäß der Schnittlinie III-III, wobei im Bereich des inneren Endes des Ansaugstutzens die Schnittebene etwas versetzt und durch das Stutzenende gelegt ist (in der rechts gezeichneten Hälfte der Fig. 3 befindet sich die Verschlußeinrichtung in ihrer Betriebsstellung und in der links gezeichneten Hälfte in der Reinigungsstellung).

Die in Fig. 1 nur schematisiert dargestellte Bodenschleifmaschine 1 wird mit Hilfe von an ihrer Unterseite angeordneten Rollen und/oder Rädern 2 über den betreffenden Holzboden 3 geschoben oder gezogen. In Ihrem Maschinengehäuse 4 läuft ein motorisch angetriebenes Schleifband 5, das an der Maschinen-Unterseite etwas vorsteht und mit dem Holzboden 3 in Eingriff gelangt. Der beim Abschleifen des Bodens 3 entstehende Staub wird mittels eines Gebläses 6 von seiner Entstehungsstelle beim Schleifband 5 abgesaugt. Diese Staubluft gelangt anschließend an das Gebläse 6 an dessen Druckseite in ein nach oben gehendes und einen Handgriff 7 zum Ziehen und Schieben der Maschine tragendes Rohr 8. An das Ende dieses Rohres ist eine Vorrichtung 9 angeschlossen, die zum Entfernen des Staubs aus der abgesaugten Staubluft und zum Sammeln des Staubes dient.

Die Bodenschleifmaschine 1 könnte auch anders als gezeigt ausgestaltet sein. Ferner kann die nachfolgend im einzelnen erläuterte Vorrichtung 9 prinzipiell auch in Verbindung mit anderen Werkstückbearbeitungsmaschinen eingesetzt werden, bei denen eine Staubabsaugung vorhanden ist.

Die Vorrichtung 9 weist eingangsseitig einen Ansaugstutzen 10 auf, mit dem sie an das die Staubluft zuführende Teil, beim Ausführungsbeispiel an das Rohr 8, anschließbar ist. Die durch den Ansaugstutzen 10 eintretende Staubluft gelangt in einen Staubabscheider 11, dem im Luftströmungsweg eine Filtereinrichtung 12 nachgeordnet ist, die aus den Staub zurückhaltendem luftdurchlässigem Material besteht, so daß die vom Staub befreite Luft durch die Filtereinrichtung 12 in die Umgebung austritt. Der Strömungsweg ist durch in die rechte Hälfte der Fig. 3 eingezeichnete Pfeile angedeutet. In der links gezeigten Reinigungsstellung der noch zu beschreibenden Verschlußeinrichtung ist die Staubabsaugung ausgeschaltet, so daß in dieser Stellung keine Luftströmung erfolgt.

Es versteht sich, daß in der Betriebsstellung der Verschlußeinrichtung selbstverständlich die gesamte Vorrichtung durchströmt wird.

Der dargestellte Staubabscheider 11 weist eine im wesentlichen rotationssymmetrische Gestalt auf und wird zweckmäßigerweise von einem Fliehkraft- oder Zyklonabscheider gebildet. Dabei handelt es sich bei dem Abscheider 11 um ein in Gebrauchslage im wesentlichen vertikal ausgerichtetes, rohrähnliches Gehäuse, in dessen oberen Bereich der Ansaugstutzen 10 tangential einmündet. Im Innenraum 13 des Staubabscheiders 11 entsteht eine schraubenförmig nach unten gerichtete Rotationsströmung (in Fig. 3 sind die den Strömungsweg wiedergebenden Pfeile der Einfachheit halber axial gerichtet gezeichnet, d.h. sie geben nur sozusagen die Axialkomponente der schraubenförmigen Rotationsströmung wider), wobei die Staubteilchen unter dem Einfluß der auf sie einwirkenden Zentrifugalkräfte nach außen an die Innenseite 14 des Staubabscheiders 11 bzw. der Staubabscheider-Gehäusewand wandert und infolge der Schwerkraft und der Axialkomponente der Luftströmung nach unten zu einer an der Unterseite des Staubabscheiders 11 vorhandenen Staubaustrittsöffnung 15 gelangen. Unterhalb der Staubaustrittsöffnung 15 kann ein in Fig. 3 nur strichpunktiert angedeutetes Staubsammelbehältnis 16 angeschlossen werden, so daß der im Staubabscheider 11 abgeschiedene Staub aufgrund seiner Schwerkraft durch die Staubaustrittsöffnung 15 in das Staubsammelbehältnis 16 fällt. Beim Ausführungsbeispiel erstreckt sich die Staubaustrittsöffnung 15 über den gesamten Querschnitt des unteren Endes des Staubabscheiders 11, d.h. das diesen bildende rohrartige Gehäuse ist unten insgesamt offen.

Das Staubabscheidergehäuse weist über einen wesentlichen Teil seiner Länge einen nach unten hin leicht konisch zulaufenden Bereich 17 auf, was eine nach unten zum Zentrum gerichtete Strömung bewirkt. Im unteren Bereich des Staubabscheiders kehrt sich die Strömungsrichtung der Luft um, die sodann im zentralen Bereich nach oben zur an der Oberseite angeordneten Luftaustrittsöffnung 18 des Abscheiders strömt. Dabei enthält der Staubabscheider 11 oberhalb seiner Staubaustrittsöffnung 15 ein zentrales Tauchrohr 19, dessen der Staubaustrittsöffnung 15 zugewandtes unteres Ende 20 offen ist und dessen entgegengesetztes Ende die Luftaustrittsöffnung 18 bildet und mit der Filtereinrichtung 12 verbunden ist. In diesem Tauchrohr 19 erfolgt die erwähnte Aufwärtsströmung der Luft.

Der weit aus größte Teil des in der ankommenden Luft enthaltenen Staubes wird in dem Staubabscheider 11 abgeschieden und fällt aus diesem in das Behältnis 16. In der die Luftaustrittsöffnung 18 verlassenden Luft ist daher nur ein geringerer Restanteil der ursprünglichen Staubmenge enthalten. Durch Versuche läßt sich die Gestalt des Abscheiders so optimieren, daß etwa 98% des Staubes ausgefällt werden.

Die der Luftaustrittsöffnung 18 im Strömungsweg nachgeordnete Filtereinrichtung 12 begrenzt eine mit der Luftaustrittsöffnung 18 verbundene Filterkammer 21 nach außen zur Umgebung hin. An der Unterseite dieser Filterkammer 21 ist eine Staubauslaßöffnung 22 angeordnet, wobei sich das bereits erwähnte Staubsammelbehältnis 16 unterhalb der Staubauslaßöffnung 22 befindet und dem Übergang von der Staubauslaßöffnung 22 zum Staubsammelbehältnis 16 eine Verschlußeinrichtung 23 zugeordnet ist, die zwischen einer den Übergang verschließenden Betriebsstellung (in Fig. 3 rechts) und einer den Übergang freigebenden Reinigungsstellung (in Fig. 3 links) mittels einer Betätigungseinrichtung 24 von außen her verstellbar ist.

Im Prinzip könnte man der Filterkammer 21 ein gesondertes Staubsammelbehältnis zuordnen. Es ist jedoch ohne weiteres ersichtlich, daß das gemeinsame Staubsammelbehältnis 16, das sowohl der Staubaustrittsöffnung 15 des Staubabscheiders 11 als auch der Staubauslaßöffnung 22 der Filterkammer 21 zugeordnet ist, vorteilhaft ist. Das Staubsammelbehältnis 16 läßt sich an eine Anschlußöffnung 25 in im einzelnen nicht dargestellter Weise anschließen, wobei die Anschlußöffnung 25 unterhalb der Staubaustrittsöffnung 15 des Staubabscheiders 11 und der Staubauslaßöffnung 22 der Filterkammer 21 angeordnet ist. Dabei steht die Staubabscheider-Austrittsöffnung 15 stets in offener Verbindung mit der Anschlußöffnung 15, während die Filterkammer-Auslaßöffnung 22 nur dann mit der Anschlußöffnung 25 verbunden ist, wenn sich die Verschlußeinrichtung 23 in ihrer Reinigungsstellung befindet.

Während des Betriebs, d.h. bei eingeschalteter Staubabsaugung, ist die Verschlußeinrichtung 23 in ihre die Filterkammer 21 abtrennende Betriebsstellung verstellt. Andernfalls wären der Innenraum 13 des Staubabscheiders 11 und die Filterkammer 21 unten miteinander verbunden. Die beim Betrieb aus dem Abscheider zur Filtereinrichtung 12 gelangende Reststaubmenge wird von der Filtereinrichtung aus der anschließend austretenden Luft ausgefiltert und fällt, soweit der Staub nicht an der Filtereinrichtung hängen bleibt, nach unten zur Unterseite der Filterkammer 21, wo sich die Staubauslaßöffnung 22 befindet. Will man die sich hier im Laufe der Zeit ergebende Staubansammlung entfernen, braucht man bei abgeschalteter Staubabsaugung die Verschlußeinrichtung 23 nur in ihre Reinigungsstellung zu überführen, so daß der Durchgang nach unten zum Behältnis 16 frei wird und der Staub aufgrund der Schwerkraft in das Behältnis 16 rutschen oder fallen kann.

Die Filtereinrichtung 12 ist flächig ausgebildet, wobei das Filtermaterial eine vertikale Lage einnimmt. Dabei handelt es sich um ein an sich übliches Filtermaterial papier- oder vliesartiger Gestalt. Eine besonders große Filterfläche und eine möglichst klein bauende Anordnung ergibt sich dadurch, daß die Filtereinrichtung 12 Ringgestalt aufweist und den Staubabscheider 11 umschließt, so daß die dazwischen befindliche Filterkammer 21 ebenfalls ringförmig umläuft. Der Staubabscheider 11, die Filterkammer 21 und die Filtereinrichtung 12 sind koaxial zueinander angeordnet, wobei der Staubabscheider die innenseitige Begrenzung der Filterkammer 21 bildet. Die Staubauslaßöffnung 22 der Filterkammer ist ebenfalls ringförmig, d.h. die Filterkammer 21 ist nach unten hin rundum offen.

Die Luftaustrittsöffnung 18 des Staubabscheiders 11 ist zentral an der Staubabscheider-Oberseite angeordnet und über einen ringförmigen Verbindungsraum 26 mit der Oberseite 27 der Filterkammer 21 verbunden. Dabei ist die Anordnung zweckmäßigerweise so getroffen, daß der Verbindungsraum 26 einerseits, nach innen hin, von einer vom Rand der Luftaustrittsöffnung 18 abstehenden Ringwand 28 und andererseits, d.h. außen, von einer mit Abstand zur Ringwand 28 verlaufenden, die Luftaustrittsöffnung 18 übergreifenden Außenwand 29 begrenzt wird. Die Ringwand 28 und die Außenwand 29 stehen sozusagen pilzähnlich von der Luftaustrittsöffnung ab. Dabei setzt sich der Verbindungsraum 26 aus einem der Luftaustrittsöffnung 18 zugewandten radialen Bereich 30 und aus einem sich an diesen anschließenden axialen Bereich 30 zusammen, der zur mit axialem Abstand zur Luftaustrittsöffnung 18 angeordneten Oberseite 27 der Filterkammer verläuft.

Die Außenwand 29 bildet die Oberseite der Vorrichtung, wobei an ihr der Filtereinrichtung 12 zugewandtes Ende noch ein radial nach außen hin vorstehender, ringförmiger Halteflansch 32 angesetzt ist, zwischen dem und einem in axialer Richtung entgegengesetzten unteren Halteflansch 33, der ebenfalls ringförmig ist, die Filtereinrichtung 12 gehalten wird. Der obere Halteflansch 32 befindet sich neben der ringförmig offenen Oberseite 27 und der untere Halteflansch 33 neben der ringförmig offenen Staubauslaßöffnung 22 der Filterkammer 21.

Wie vor allem aus Fig. 2 hervorgeht, ist die Filtereinrichtung 12 bzw. das sie bildende Filtermaterial innerhalb der Ringgestalt hin und her verlaufend gefaltet. Dies ergibt eine besonders große Filteroberfläche. Diese Filtereinrichtung 12 wird zur Umgebung hin von einem Lochblech 34 abgedeckt, das zum Schutz der Filtereinrichtung gegen mechanische Beschädigungen von außen her dient und durch dessen Löcher die vom Staub befreite Luft in die Umgebung gelangt. Das Lochblech 34, das der Ringgestalt der Filtereinrichtung entsprechend umläuft und daher beim Ausführungsbeispiel zylindrisch ist, wird ebenfalls zwischen den beiden Halteflanschen 32,33 gehalten, die hierzu einen das jeweilige Lochblech-Stirnende etwas übergreifenden abgekanteten Rand besitzen. Von der Außenseite des Lochbleches 34 kann noch eine Halteeinrichtung beispielsweise in Gestalt von Blechleisten 35 nach außen hin abstehen, über die die Vorrichtung an der jeweiligen Maschine, bei der in Fig. 1 gezeigten Maschine am Rohr 8, befestigt werden kann. Es versteht sich, daß die Art der Befestigung der Vorrichtung an der betreffenden Maschine anders sein kann.

Der Ansaugstutzen 10 ist oberhalb der Filtereinrichtung 12 angeordnet, durchdringt den Verbindungsraum 30 und mündet dann im Bereich der Ringwand 28 tangential von der Seite her in den Innenraum 13 des Abscheiders 11. Prinzipiell könnte der Ansaugstutzen auch durch die Filtereinrichtung hindurchgeführt werden.

Wie bereits erwähnt, ist die Staubauslaßöffnung 22 der Filterkammer 21 mittels der Verschlußeinrichtung 23 mit dem Zwischenraum zwischen dem Staubabscheider 11 und der gemeinsamen Anschlußöffnung 25, der sozusagen den Fallweg zu aus dem Abscheider kommenden Staubes bildet, verbindbar. Diese Verschlußeinrichtung 23 wird zweckmäßigerweise von einem von außen her betätigbaren Verschlußschieber 36 gebildet. Dabei ist es im Hinblick auf die rotationssymmetrische Ausbildung des Ausführungsbeispiels vorteilhaft, daß an der Unterseite, d.h. im Bereich der Staubaustrittsöffnung des Staubabscheiders 11 eine in axialer Richtung dem Fallweg entlang verschiebbare, von der Auslaßöffnung 22 der Filterkammer 21 ringförmig umschlossene Schieberhülse als Verschlußschieber 36 angeordnet ist. Es handelt sich also um einen, rohrähnlichen Verschlußschieber 36, der koaxial zum Abscheider 11 angeordnet ist. Dabei ist er zweckmäßigerweise unmittelbar am Abscheider 11 verschiebbar geführt, indem der Staubabscheider 11 an seiner Unterseite einen zylindrischen Gehäusebereich 37 aufweist, mit dem ein zylindrischer Führungsbereich 38 der Schieberhülse 36 in verschiebbarer Steckverbindung steht. Die Schieberhülse 36 bildet also sozusagen eine Verlängerung des Staubabscheiders 11. Als vorteilhaft hat sich herausgestellt, daß die Schieberhülse 36 auf den Staubabscheider 11 aufgesteckt ist, damit die Strömungsverhältnisse im Staubabscheider nicht ungünstig beeinflußt werden.

Dem dem Staubabscheider 11 entgegengesetzte Ende der Schieberhülse 36 ist ein feststehender Ringsitz 39 zugeordnet, so daß die Schieberhülse 36 in ihrer Betriebsstellung am Ringsitz 39 anliegt und in ihrer Reinigungsstellung vom Ringsitz 39 abgehoben ist, so daß sich in der Reinigungsstellung ein ringförmiger Durchlaß von der Staubauslaßöffnung 22 zur Anschlußöffnung 25 ergibt.

Der Ringsitz 39 wird von einer zylindrischen Gehäusepartie 40 gebildet. Der zugeordnete untere Endbereich 41 der Schieberhülse 36 ist ebenfalls zylindrisch und weist einen dem Innendurchmesser der zylindrischen Gehäusepartie 40 entsprechenden Aussendurchmesser auf, so daß er gleitend in die zylindrische Gehäusepartie 40 eingreifen kann. Die zylindrische Gehäusepartie 40 und der untere Halteflansch 33 werden von einem aus Metallblech bestehenden Bodenteil 42 der Vorrichtung gebildet und sind über eine konische Wandpartie 43, die die Staubauslaßöffnung 22 bzw. den Übergang von der Filterkammer 21 zur Anschlußöffnung 25 begrenzt, miteinander verbunden.

Wie erwähnt, läßt sich die Schieberhülse 36 von außen her betätigen. Hierzu ist beim Ausführungsbeispiel zweckmäßigerweise vorgesehen, daß die Betätigungseinrichtung 24 einen durch den Staubabscheider 11 verlaufenden, in axialer Richtung bewegbaren Betätigungsstab 44 od.dgl. aufweist, der mit der Schieberhülse 36 fest verbunden ist und zur entgegengesetzten Oberseite des Staubabscheiders 11 verläuft. Dabei ist der Betätigungsstab 44 koaxial zum Staubabscheider 11 angeordnet und durch das Tauchrohr 19 hindurch geführt. Er tritt an der Staubabscheider-Oberseite aus und ist dort mit einem Handgriff 45 versehen. Das untere Ende des Betätigungsstabes 44 ist beispielsweise über einen T-förmig angesetzten Querstab 46 mit der Innenseite der Schieberhülse 36 fest verbunden. Zum Überführen der Schieberhülse aus ihrer Betriebsstellung in ihre Reinigungsstellung oder umgekehrt muß man nur am Handgriff 45 ziehen bzw. drücken. Durch ein schnelles Hin- und Herbewegen des Handgriffs 45 ergibt sich außerdem sozusagen ein Rütteleffekt, was das nach unten Fallen des Staubs aus der Filterkammer 21 erleichtert.

Eine weitere zweckmäßige Maßnahme besteht darin, daß in der Filterkammer 21 eine an der Filtereinrichtung 12 zum Abstreifen und/oder Abschütteln des Staubs angreifende, von außen her betätigbare Reinigungseinrichtung 47 angeordnet ist. Beim Ausführungsbeispiel handelt es sich dabei um mindestens eine Bürste 48, wobei zwei solche Bürsten dargestellt sind. Bewegt man die Reinigungseinrichtung 47 bzw. die Bürsten 48 über die Filtereinrichtung 12, fällt der an dieser anhaftende Staub nach unten.

Die Betätigung der Reinigungseinrichtung 47 kann sehr einfach dadurch erfolgen, daß die Reinigungseinrichtung fest mit der Verschlußeinrichtung 23, d.h. beim Ausführungsbeispiel mit der Schieberhülse 36 verbunden ist. Beim Verstellen der Schieberhülse 36 wird also die Reinigungseinrichtung mitbewegt. Das untere Ende des Borstenträgers 50 der mindestens einen Bürste 48 ist an der Außenseite der Schieberhülse 36 befestigt, so daß sich der Borstenträger 5o und somit die Bürste 48 der Außenseite des Staubabscheiders 11 entlang nach oben erstreckt.

Damit die Reinigungseinrichtung 47 nicht nur in axialer Richtung sondern auch in Umfangsrichtung bewegt werden kann, ist es vorteilhaft, daß die Schieberhülse 36 von außen her nicht nur in axialer Richtung bewegbar sondern auch, verdrehbar angeordnet ist.

Da das Staubsammelbehältnis 16 nur zur Aufnahme des Staubes und nicht zum Filtern der Staubluft dient, besteht es aus völlig staubdichtem Material. Dabei besteht das Staubsammelbehältnis 16 zweckmäßigerweise aus durchsichtigem Material, so daß von außen her jederzeit die Füllhöhe sichtbar ist und somit erkannt werden kann, wann das Behältnis ausgewechselt werden muß. Solche Behältnisse stehen am einfachsten in Gestalt von durchsichtigen Kunststoffbeuteln oder -säcken zur Verfügung.

Die Anschlußeinrichtung 51, über die das Behältnis 16 mit der Anschlußöffnung 25 verbunden wird, ist im einzelnen nicht dargestellt. Sie ermöglicht einen staubdichten Anschluß und eine nicht staubende Wegnahme des Behältnisses 16.

Nachzutragen ist noch, daß die Betätigungseinrichtung 24 in Richtung auf die Betriebsstellung der Schieberhülse 36 hin federbelastet sein kann, z.B. indem an der Betätigungsstange 44 eine entsprechende Feder (nicht dargestellt) angreift.

## Patentansprüche

1. Vorrichtung zum Entfernen von Staub aus einer an einer Werkstückbearbeitungsmaschine, insbesondere eine Bodenschleifmaschine, abgesaugten Staubluft, mit einem im Strömungsweg angeordneten Staubabscheider (11) in Gestalt eines Fliehkraft- oder Zyklonabscheiders, der eine untere Staubaustrittsöffnung (15) aus der der abgeschiedene Staub über einen Fallweg hinweg zu einer Anschlußöffnung (25) zum Anschließen eines Staubsammelbehältnisses (16) fällt, und eine obere Luftaustrittsöffnung (18) für den Austritt der vom abgeschiedenen Staub befreite Luft aufweist, und mit einer im Strömungsweg dem Staubabscheider (11) nachgeordneten Filtereinrichtung (12) zum Ausfiltern des Reststaubes, die Ringgestalt aufweist und den Staubabscheider (11) unter Bildung einer Filterkammer (21) umschließt, die mit der Luftaustrittsöffnung (18) des Staubabscheiders (11) verbunden ist, dadurch gekennzeichnet, daß an der Unterseite der Filterkammer (21) eine Staubauslaßöffnung (22) zum Abführen des ausgefilterten Staubes angeordnet und die Anschlußöffnung (25) für das Staubsammelbehältnis (16) sowohl der Staubaustrittsöffnung (15) des Staubabscheiders (11) als auch der Staubauslaßöffnung (22) der Filterkammer (21) gemeinsam zugeordnet ist, wobei der Übergang von der Staubauslaßöffnung (22) der Filterkammer (21) zur Anschlußöffnung (25) von einer Verschlußeinrichtung (23) beherrscht wird, die mittels einer von außen her bedienbaren Betätigungseinrichtung (24) zwischen einer den Übergang verschließenden Betriebsstellung und einer den Übergang freigebenden Reinigungsstellung verstellbar ist, wobei die Staubauslaßöffnung (22) der Filterkammer (21) mittels eines Verschlußschiebers (36) als Verschlußeinrichtung (23) mit dem Fallweg des Staubes zwischen dem Staubabscheider (11) und der gemeinsamen Anschlußöffnung (25) verbindbar ist und an der Unterseite des Staubabscheiders (11) eine in axialer Richtung dem Fallweg entlang verschiebbare, von der Auslaßöffnung (22) der Filterkammer (21) ringförmig umschlossene Schieberhülse als Verschlußschieber (36) angeordnet ist, deren dem Staubabscheider (11) entgegengesetzten, der Anschlußöffnung (25) zugewandten Ende ein feststehender Ringsitz (39) zugeordnet ist, so daß die Schieberhülse in ihrer Betriebsstellung am Ringsitz (39) anliegt und in ihrer Reinigungsstellung vom Ringsitz (39) abgehoben ist.

2. Vorrichtung nach Anspruch 1, dadurch gekennzeichnet, daß der Staubabscheider (11) an seiner Unterseite einen zylindrischen Gehäusebereich (37) aufweist, mit dem ein zylindrischer Führungsbereich (38) der Schieberhülse (36) in verschiebbarer Steckverbindung steht.

3. Vorrichtung nach Anspruch 2, dadurch gekennzeichnet, daß die Schieberhülse (36) auf den Staubabscheider (11) aufgesteckt ist.

4. Vorrichtung nach einem der Ansprüche 1 bis 3, dadurch gekennzeichnet, daß die Betätigungseinrichtung (24) zum Verstellen des Verschlußschiebers (36) einen durch den Staubabscheider (11) verlaufenden, in axialer Richtung bewegbaren Betätigungsstab (44) od.dgl. aufweist, der mit dem Verschlußschieber (36) fest verbunden ist und zur entgegengesetzten Oberseite des Staubabscheiders (11) verläuft.

5. Vorrichtung nach Anspruch 4, dadurch gekennzeichnet, daß der Betätigungsstab (44) od.dgl. durch ein oberhalb der Staubaustrittsöffnung (15) zentral im Staubabscheider (11) angeordnetes, mit seinem oberen Ende die mit der Filterkammer (21) verbundene Luftaustrittsöffnung (15) bildendes Tauchrohr (19) verläuft.

6. Vorrichtung nach einem der Ansprüche 1 bis 5, dadurch gekennzeichnet, daß die Filtereinrichtung (12) in sich hin und her verlaufend gefaltet ist.

7. Vorrichtung nach einem der Ansprüche 1 bis 6, dadurch gekennzeichnet, daß in der Filterkammer (21) eine an der Filtereinrichtung (12) zum Abstreifen und/oder Abschütteln des Staubes angreifende, von außen her betätigbare Reinigungseinrichtung (47) angeordnet ist.

8. Vorrichtung nach Anspruch 7, dadurch gekennzeichnet, daß die Reinigungseinrichtung (47) von mindestens einer Bürste (48) gebildet wird.

9. Vorrichtung nach Anspruch 7 oder 8, dadurch gekennzeichnet, daß die Reinigungseinrichtung (47) fest mit der Verschlußeinrichtung (23) verbunden ist.

10. Vorrichtung nach Anspruch 9, dadurch gekennzeichnet, daß die Schieberhülse (36) von außen her nicht nur in axialer Richtung bewegbar sondern auch verdrehbar angeordnet ist.

11. Vorrichtung nach einem der Ansprüche 1 bis 10, dadurch gekennzeichnet, daß ihr ein Staubsammelbehältnis (16) aus durchsichtigem Material zugeordnet ist.

## Claims

1. Device to remove dust from dusty air extracted from a workpiece machining tool, in particular a floor grinding machine, with a dust separator (11) in the form of a centrifugal separator or cyclone located in the flow path, with a lower dust outlet orifice (15) from which the separated dust falls via a path of descent to a connection opening (25) at which a dust collector (16) may be connected, and with an upper air outlet orifice (18) for the release of the air freed of the separated dust, and with a filter device (12) in the flow path downstream of the dust separator (11) for filtering out the remaining dust, said filter device being annular in shape and embracing the dust separator (11) to form a filter chamber (21) which is connected to the air outlet orifice (18) of the dust separator (11), characterized in that a dust outlet orifice (22) for removal of the filtered-out dust is located on the underside of the filter chamber (21) and the connection opening (25) for the dust collector (16) is jointly assigned to both the dust outlet orifice (15) of the dust separator (11) and to the dust outlet orifice (22) of the filter chamber (21), with the passage from the dust outlet orifice (22) of the filter chamber (21) to the connection opening (25) controlled by a closing device (23), adjustable by means of an actuating device (24) operable from outside between an operating position closing the passage and a cleaning position releasing the passage, wherein the dust outlet orifice (22) of the filter chamber (21) is connectable by means of a closing slide (36) as closing device (23) to the path of descent of the dust between the dust separator (11) and the common connection opening (25), and on the underside of the dust separator (11) is mounted a sliding sleeve as closing slide (36), capable of sliding axially along the path of descent, annularly enclosed by the outlet orifice (22) of the filter chamber (21), with a fixed annnular seat (39) assigned to the end facing the connection opening (25) and opposite the dust separator (11), so that the sliding sleeve in its operating position rests against the annular seat (39) and is lifted from the annular seat (39) in its cleaning position.

2. Device according to claim 1, characterized in that the dust separator (11) has on its underside a cylindrical housing section (37) with which a cylindrical guide section (38) of the sliding sleeve (36) makes a slideable plug-in connection.

3. Device according to claim 2, characterized in that the sliding sleeve (36) is fitted on top of the dust separator (11).

4. Device according to any of claims 1 to 3, characterized in that the actuating device (24) for adjusting the closing slide (36) has an axially-moveable actuating rod (44) or the like passing through the dust separator (11), which is firmly connected to the closing slide (36) and runs to the opposite upper side of the dust separator (11).

5. Device according to claim 4, characterized in that the actuating rod (44) or the like passes through a submerged tube (19) located above the dust outlet orifice (15) in the centre of the dust separator (11), forming with its upper end the air outlet orifice (15) connected to the filter chamber (21).

6. Device according to any of claims 1 to 5, characterized in that the filter device (12) is folded in pleated fashion.

7. Device according to any of claims 1 to 6, characterized in that a cleaning device (47) actuable from outside, engaging with the filter device (12) to wipe off and/or shake off the dust, is mounted in the filter chamber (21).

8. Device according to claim 7, characterized in that the cleaning device (47) is formed of one or more brushes (48).

9. Device according to claim 7 or 8, characterized in that the cleaning device (47) is permanently connected to the closing device (23).

10. Device according to claim 9, characterized in that the sliding sleeve (36) is mounted such that it can be moved axially or turned from the outside.

11. Device according to any of claims 1 to 10, characterized in that it is assigned a dust collector (16) of transparent material.

## Revendications

1. Dispositif destiné à éliminer les poussières contenues dans l'air poussiéreux aspiré par une machine d'usinage de pièces, en particulier une ponceuse à parquet, comportant un séparateur de poussières (11) placé dans le parcours d'écoulement, sous la forme d'un séparateur centrifuge ou à cyclone, qui comporte un orifice de sortie de poussières (15) inférieur par lequel les poussières séparées tombent, par un parcours de chute, vers une ouverture de raccordement (25) destinée au raccordement d'un récipient collecteur de poussières (16), ainsi qu'un orifice de sortie d'air (18) supérieur pour la sortie de l'air libéré des poussières séparées, et comportant un dispositif de filtrage (12), monté en aval du séparateur de poussières (11), dans le parcours d'écoulement, pour le filtrage des poussières résiduelles, lequel dispositif présente une forme en anneau et enferme le séparateur de poussières (11) en formant une chambre de filtrage (21), qui communique avec l'orifice de sortie d'air (18) du séparateur de poussières (11), caractérisé en ce que sur la face inférieure de la chambre de filtrage (21) il est prévu une ouverture d'évacuation de poussières (22) pour l'évacuation des poussières séparées par filtrage et l'ouverture de raccordement (25) pour le récipient collecteur de poussières (16) est associée à l'orifice de sortie de poussières (15) du séparateur de poussières (11) ainsi qu'à l'ouverture d'évacuation de poussières (22) de la chambre de filtrage (21), le passage de l'ouverture d'évacuation de poussières (22) de la chambre de filtrage (21) à l'ouverture de raccordement (25) étant maîtrisé par un dispositif de fermeture (23), qui est réglable, au moyen d'un dispositif d'actionnement (24), commandé de l'extérieur, entre une position de fonctionnement fermant le passage et une position de nettoyage, libérant le passage, l'ouverture d'évacuation de poussières (22) de la chambre de filtrage (21) pouvant être reliée au moyen d'un obturateur coulissant (36), servant de dispositif de fermeture (23), avec le parcours de chute des poussières entre le séparateur de poussières (11) et l'ouverture de raccordement (25) commune, tandis que sur la face inférieure du séparateur de poussières (11) est prévu un manchon coulissant, servant d'obturateur coulissant (36), pouvant coulisser axialement le long du parcours de chute, entouré en anneau par l'ouverture d'évacuation (22) de la chambre de filtrage (21), un siège annulaire (39) fixe étant associé à l'extrémité du manchon coulissant, opposée au séparateur de poussières (11) et tournée vers l'ouverture de raccordement (25), de sorte que le manchon coulissant s'applique en position de fonctionnement contre le siège annulaire (39) et est soulevé du siège annulaire (39), dans sa position de nettoyage.

2. Dispositif selon la revendication 1, caractérisé en ce que le séparateur de poussières (11) présente, sur sa face inférieure, une zone de boîtier (37) cylindrique avec laquelle est reliée par emboîtement coulissant une zone de guidage (38) cylindrique du manchon coulissant (36).

3. Dispositif selon la revendication 2, caractérisé en ce que le manchon coulissant (36) est emboîté sur le séparateur de poussières (11).

4. Dispositif selon l'une des revendications 1 à 3, caractérisé en ce que le dispositif d'actionnement (24), prévu pour régler l'obturateur coulissant (36), comporte une barre d'actionnement (44) ou similaire, traversant le séparateur de poussières (11), déplaçable axialement, qui est solidaire de l'obturateur coulissant (36) et qui s'étend vers la face supérieure opposée du séparateur de poussières (11).

5. Dispositif selon la revendication 4, caractérisé en ce que la barre d'actionnement (44) ou similaire traverse un tube plongeur (19) placé au centre dans le séparateur de poussières (11), au-dessus de l'orifice de sortie de poussières (15), formant par son extrémité supérieure l'orifice de sortie de poussières (15), relié à la chambre de filtrage (21).

6. Dispositif selon l'une des revendications 1 à 5, caractérisé en ce que le dispositif de filtrage (12) est plié en accordéon.

7. Dispositif selon l'une des revendications 1 à 6, caractérisé en ce que dans la chambre de filtrage (21) il est prévu un dispositif de nettoyage (47) actionné de l'extérieur, agissant sur le dispositif de filtrage (12) pour racler et/ou secouer les poussières.

8. Dispositif selon la revendication 7, caractérisé en ce que le dispositif de nettoyage (47) est formé par au moins une brosse (48).

9. Dispositif selon la revendication 7 ou 8, caractérisé en ce que le dispositif de nettoyage (47) est solidaire du dispositif de fermeture (23).

10. Dispositif selon la revendication 9, caractérisé en ce que le manchon coulissant (36) est non seulement déplaçable axialement de l'extérieur, mais aussi tournant.

11. Dispositif selon l'une des revendications 1 à 10, caractérisé en ce qu'il lui est associé un récipient collecteur de poussières (16) en matériau transparent.
